# EUROPÄISCHE PATENTSCHRIFT

(11) **EP 2 583 931 B1**
(45) Veröffentlichungstag und Bekanntmachung des Hinweises auf die Patenterteilung: **21.05.2014**
(21) Anmeldenummer: 12175301.6
(22) Anmeldetag: 06.07.2012
(51) Int. Cl.: B67C 3/20, B65B 3/28, G01G 15/00

(54) **Vorrichtung und Verfahren zum Befüllen von Behältern**
Method and device for filling containers
Dispositif et procédé destinés au remplissage de récipients

(30) Priorität: 18.10.2011 DE 102011084721
(43) Veröffentlichungstag der Anmeldung: 24.04.2013
(73) Patentinhaber: Krones AG, 93073 Neutraubling (DE)
(72) Erfinder: Angerer, Florian, 93104 Sünching (DE)
(74) Vertreter: Grünecker, Kinkeldey, Stockmair & Schwanhäusser

(56) Entgegenhaltungen:
- EP-A1- 2 141 115
- WO-A2-2009/040759
- DE-A1- 10 301 844
- DE-A1- 19 920 494
- FR-A1- 2 770 292

## Beschreibung

Die Erfindung betrifft eine Vorrichtung zum Befüllen von Behältern mit den Merkmalen des Oberbegriffs von Patentanspruch 1.

Vorrichtungen zum Befüllen von Behältern dienen üblicherweise dazu, eine vorherbestimmte Füllmenge eines fließfähigen Mediums in Behälter einzufüllen. Das fließfähige Medium umfasst dabei Getränke, flüssige Medikamente, chemische Erzeugnisse oder Pasten. Derartige Vorrichtungen weisen einen Füller mit umlaufenden Behälterstationen auf, welche die Behälter mit einer konstanten Behältergeschwindigkeit weitertransportieren und gleichzeitig befüllen und/oder wiegen. Über einen Zulauf werden der Vorrichtung dabei leere Behälter zugeführt und befüllte Behälter werden über einen Ablauf abgeführt.

Befüllvorrichtungen dieser Art gibt es in den verschiedensten Ausführungsformen. Bei einer Gattung arbeitet jede Behälterstation üblicherweise auch als Messstation. Dabei wird nach dem Zulauf das Leergewicht des Behälters mit einem der Behälterstation zugeordneten Wiegeelement ermittelt. Die erste Messzeit ergibt sich dabei im Wesentlichen nach einer Beruhigungszeit des Wiegeelements, da dieses zunächst durch die aufgebrachte Masse des leeren Behälters nachschwingt. Anschließend arbeitet die Behälterstation als Füllstation und der Behälter wird durch eine zeitgesteuerte Dosiereinrichtung mit dem fließfähigen Medium befüllt. Dabei wird ein Ventil in der Dosiereinrichtung geöffnet und der Fluss des fließfähigen Mediums für eine vorherbestimmte Füllzeit freigegeben. Nach der Befüllung arbeitet die Behälterstation wiederum während einer weiteren Messzeit als Messstation zur Bestimmung des Endgewichts des Behälters. Aus der Differenz zwischen dem Leergewicht und dem Endgewicht wird so die Füllmenge des fließfähigen Mediums berechnet. Die weitere Messzeit ergibt sich wiederum im Wesentlichen aus einer erneuten Beruhigungszeit des befüllten Behälters auf dem Wiegeelement. Falls die gemessene Füllmenge des Behälters von der eingestellten Füllmenge abweicht, wird die Zeitsteuerung für nachfolgende Behälter entsprechend korrigiert.

Derartige Vorrichtungen haben zum Nachteil, dass der Füller größer ausgeführt werden muss, als dies für den eigentlichen Befüllvorgang notwendig ist und die Wiegeelemente bleiben während des Befüllvorgangs ungenutzt. Zusätzlich bleiben die Dosiereinrichtungen während des Wiegevorgangs ungenutzt. Dies kann hohe Vorrichtungskosten zur Folge haben.

WO 2009 040759 offenbart eine Vorrichtung zum Befüllen von Behältern gemäß dem Oberbegriff von Anspruch 1, umfassend einen Füller mit mehreren Füllstationen, zu der Behälter über einen Zulauf zugeführt und von der Behälter über einen Ablauf abgeführt werden, wobei dem Füller zwei Transporteinrichtungen mit mehreren Messstationen zum Wiegen der Behälter derart zugeordnet sind, dass eine Messstrecke der ersten Transporteinrichtung zur Bestimmung des Leergewichts der Behälter im Zulauf und eine Messstrecke der zweiten Transporteinrichtung zur Bestimmung des Endgewichts der Behälter im Ablauf gebildet wird.

Aufgabe der Erfindung ist es, eine Vorrichtung und ein Verfahren zum Befüllen von Behältern mit einem kompakteren Füller bereitzustellen und die Dosiereinrichtungen sowie die Wiegeelemente effizienter einzusetzen und dabei die Füllmenge genauer zu bestimmen.

Die Erfindung stellt eine Vorrichtung zum Befüllen von Behältern mit den Merkmalen des Oberbegriffs des Anspruchs 1 mit den Merkmalen des kennzeichnenden Teils bereit, gemäß dem dem Füller ein Karussell mit mehreren Messstationen zum Wiegen der Behälter derart zugeordnet ist, wobei eine Messstrecke des Karussells zur Bestimmung des Leergewichts der Behälter im Zulauf und eine Messstrecke desselben Karussells zur Bestimmung des Endgewichts der Behälter im Ablauf gebildet wird.

Da die erfindungsgemäße Vorrichtung über ein Karussell mit Messstationen zum Wiegen der Behälter verfügt, welches dem Füller derart zugeordnet ist, dass eine Messstrecke des Karussells zur Bestimmung des Leergewichts der Behälter im Zulauf und eine Messstrecke desselben Karussells zur Bestimmung des Endgewichts der Behälter im Ablauf gebildet wird, werden die im Stand der Technik als Messstationen arbeitenden Behälterstationen im Füller nicht mehr benötigt. Der Füller kann somit kompakter ausgeführt werden. Die Behälterstationen des Füllers bei der erfindungsgemäßen Vorrichtung können als reine Füllstationen ausgebildet werden und müssen keine Wiegeelemente mehr aufweisen. Während die Füllerelemente bei der erfindungsgemäßen Vorrichtung während des gesamten Befüllvorgangs genutzt werden, werden zur gleichen Zeit im zugeordneten Wiegekarussell sowohl die leeren als auch die vollen Behälter gewogen. Dadurch werden sowohl die Anzahl der Messstationen und damit der Wiegeelemente als auch die der Dosiereinrichtungen reduziert und damit effizienter eingesetzt. Zusätzlich wird in der erfindungsgemäßen Vorrichtungen das Wiegekarussell nicht nur für das Wiegen des Endgewichts der Behälter sondern auch für das Wiegen deren Leergewichts eingesetzt, ohne dabei einen höheren Aufwand für die Konstruktion, die Synchronisierung von Füller und Karussell und die Steuerung zu benötigen. Dadurch lässt sich die Füllmenge der Behälter genauer bestimmen.

Eine erfindungsgemäße Vorrichtung ist grundsätzlich breit verwendbar. Sie kann z.B. zum Abfüllen verschiedenster fließfähiger Medien wie z.B. Getränke, Pasten, chemische, biologische und/oder pharmazeutische Produkte verwendet werden. Die Vorrichtung kann in einer Getränkeverarbeitungsanlage angeordnet sein. Bei den Behältern kann es sich insbesondere um Getränkebehälter handeln, wobei dies insbesondere Kunststoffflaschen, Glasflaschen und/oder Dosen umfassen. Die Vorrichtung zum Befüllen von Behältern kann dafür bestimmt sein, einen kontinuierlichen Strom von Behältern jeweils mit einer vorherbestimmten Füllmenge zu befüllen und durch Wiegen zu erfassen.

Das Karussell kann derart ausgeführt sein, dass das Leergewicht aller Behälter im Zulauf und das Endgewicht aller Behälter im Ablauf gewogen wird. Dabei kann das Karussell derart ausgebildet sein, dass sich die Messstationen um eine gemeinsame Achse auf einer Kreisbahn drehen und dabei insbesondere die Messstrecke zur Bestimmung des Leergewichts im Zulauf von einem ersten Kreissektor gebildet wird und die Messstrecke zur Bestimmung des Endgewichts im Ablauf von einem zweiten Kreissektor gebildet wird. Ebenso können die beiden Messstrecken auf der Kreisbahn der Messstationen überlappend ausgebildet sein, wobei insbesondere die Messstationen den beiden Messstrecken alternierend zugeordnet sind. Die Bestimmung des Leergewichts kann bedeuten, dass der Behälter bereits mit mindestens einer Komponente aus einem vorhergehenden Prozessschritt befüllt ist und diese dem Leergewicht des Behälters zugeordnet wird.

Das Karussell kann derart ausgeführt sein, dass die leeren Behälter dem Karussell über eine Zuführung zugeführt und die befüllten Behälter über eine Abführung abgeführt werden können. Das Karussell kann derart ausgeführt sein, dass die Behälter in den Messstationen beim Durchlauf der beiden Messstrecken kontinuierlich weitertransportiert werden. Die Messstationen können dabei mit Mitnehmern ausgeführt sein, welche den Transport der Behälter bewirken.

Das Karussell kann derart ausgebildet sein, dass die Behälter im Karussell mit der gleichen Behältergeschwindigkeit wie im Füller transportiert werden. Dadurch ist eine bessere Synchronisation des Füllers und des Karussells gewährleistet. Dabei können das Karussell und der Füller derart ausgebildet sein, dass die Behälter in einem festen Raster, ähnlich den Gliedern einer Kette durch beide Systeme transportiert werden. Dadurch kann ein kontinuierlicher Behälterstrom durch die Vorrichtung gewährleistet werden.

Zwischen dem Füller und dem Karussell kann dabei mindestens ein Transportstern angeordnet sein. Beispielsweise können zwischen dem Füller und dem Karussell zwei Transportsterne angeordnet sein, welche die Behälter jeweils im Zulauf und im Ablauf übergeben. Dadurch wird der Transport der Behälter unterstützt.

Das Karussell kann insbesondere dazu vorgesehen sein, die Füllmenge der abgeführten Behälter zu bestimmen. Dabei kann das Karussell derart ausgeführt sein, dass aus der Differenz zwischen dem Endgewicht und dem Leergewicht jedes Behälters seine Füllmenge berechnet wird. Dabei kann Füllmenge das Füllgewicht und/oder das Füllvolumen bedeuten. Durch die Berechnung der Füllmenge können Schwankungen des Leergewichts der Behälter ausgeglichen werden.

Jede Messstation kann mindestens ein Wiegeelement umfassen. Dabei können die Wiegeelemente gemeinsam mit den Messstationen um die Achse des Karussells drehbar angeordnet sein. Das Wiegeelement kann einen elektronischen Kraftsensor beinhalten, welcher insbesondere dazu geeignet ist einen Wert für das Gewicht des Behälters als elektrisches Signal auszugeben.

Während dem Wiegen kann der Behälter auf mindestens einem Wiegeelement bodenseitig aufstehen. Das mindestens eine Wiegeelement kann in der Messstation auf einer Plattform angeordnet sein, die sich um die Drehachse des Karussells dreht. Dabei kann der bereits erwähnte Mitnehmer so ausgeführt sein, dass dieser den Behälter in der Messstation beim Wiegen seitlich stabilisiert.

Alternativ kann das Wiegeelement eine Verbindung zu einem Behälterhals aufweisen. Hierbei kann das Wiegeelement einen hebelartigen Arm umfassen, wobei insbesondere der hebelartige Arm beim Wiegen eine Kraft auf einen Kraftsensor ausübt. Der Kraftsensor kann einen Dehnungsmessstreifen, einen Piezosensor oder einen Sensor auf Basis der dynamischen Kraftkompensation umfassen. Der Behälterhals kann dabei über ein Klammerelement mit dem hebelartigen Arm verbunden sein, wobei insbesondere das Klammerelement die Gewichtskraft des Behälters aufnimmt und diesen seitlich stabilisiert. Anders ausgedrückt kann ein derart ausgeführtes Wiegeelement den Behälter durch eine Aufnahme am Hals wiegen, wobei insbesondere der Behälter bodenseitig frei schwebt.

Jede Füllstation kann mindestens eine zeitgesteuerte Dosiereinheit umfassen. Mindestens eine zeitgesteuerte Dosiereinheit kann bedeuten, dass in der Füllstation mindestens ein fließfähiges Medium mit je einer zeitgesteuerten Dosiereinheit abfüllbar ist. Die mindestens eine zeitgesteuerte Dosiereinheit kann ein Ventil umfassen, das über ein elektronisches oder pneumatisches Signal steuerbar ist. Damit lässt sich die Dosiereinheit besonders einfach und damit kostensparend ausführen.

Die Vorrichtung kann mindestens eine elektronische Steuereinheit umfassen. Die elektronische Steuereinheit kann so ausgeführt sein, dass sie Messsignale von den Messstationen empfängt, die den Leergewichten, Endgewichten und/oder Füllmengen der Behälter entsprechen. Insbesondere kann die elektronische Steuereinheit so ausgeführt sein, dass sie Signale von mindestens einem Sensor empfängt, wobei dies insbesondere ein Drehgeber, Hall-Sensor und/oder Behälterzähler sein kann. Ebenso kann die elektronische Steuereinheit dazu vorgesehen sein, Signale auszugeben, insbesondere um mindestens einen elektrischen Motor zu steuern, wobei dies insbesondere ein Servo- und/oder ein Schrittmotor sein kann. Ebenso kann die mindestens eine elektronische Steuereinheit so ausgeführt sein, dass sie Signale sendet um die Füllmengen in den Füllstationen zu steuern, wobei diese insbesondere dazu vorgesehen sein können, die zeitgesteuerten Dosiereinheiten zu steuern.

Die mindestens eine elektronische Steuereinheit kann dazu vorgesehen sein, das Leergewicht und das Endgewicht eines bestimmten Behälters einander zuzuordnen. Die mindestens eine elektronische Steuereinheit kann dazu vorgesehen sein, dass sie die Füllmengenwerte der Behälter den Füllstationen zuordnet und damit Signale zur Korrektur der Füllzeiten erzeugt. Die elektronische Steuereinheit kann so ausgeführt sein, dass sie die absoluten Winkelpositionen des Füllers und des Karussells erfasst, um insbesondere eine Korrelation zwischen dem Füller und dem Karussell herzustellen. Die Korrelation kann beinhalten, mit welcher Füllstation im Füller ein bestimmter Behälter befüllt wurde, der zu einem früheren Zeitpunkt im Zulauf und zu einem späteren Zeitpunkt im Ablauf im Karussell in einer Messstation gewogen wird.

Der Füller und das Karussell kann über ein Bussystem verbunden sein, welches dazu vorgesehen ist Daten auszutauschen. Der Füller und das Karussell können so jeweils mit mindestens einer Steuereinheit ausgeführt sein, wobei diese über das Bussystem miteinander verbunden sind. Dadurch sind der Füller und das Karussell mit den Messstationen flexibler einsetzbar.

Die Erfindung stellt weiterhin ein Verfahren zum Befüllen von Behältern nach Anspruch 12 bereit, gemäß dem die Behälter einem Karussell mit Messstationen zugeführt werden, dort ihre Leergewichte in einer dem Zulauf zugeordneten Messstrecke bestimmt und dann von dem Karussell an einen Füller übergeben werden, dort befüllt und dann wiederum dem selben Karussell übergeben werden um ihre Endgewichte in einer dem Ablauf zugeordneten Messstrecke zu bestimmen.

Dadurch, dass die Behälter dem Karussell mit Messstationen zugeführt werden, um die Leergewichte der Behälter zu bestimmen und die Behälter vom Füller dem selben Karussell zur Bestimmung der Endgewichte übergeben werden, können die Messstationen im Karussell effizient genutzt werden.

Das Verfahren kann insbesondere mit einer oben beschriebenen Vorrichtung durchgeführt werden. In diesem Fall kann das Verfahren ein Bereitstellen einer oben beschriebenen Vorrichtung umfassen.

Die Behälter können beim Befüllen den Füllstationen zugeordnet werden und im Karussell können insbesondere dabei Füllmengenwerte aus den Leergewichten und den Endgewichten für die Behälter berechnet und den jeweiligen Füllstationen zugeordnet werden.

Mit anderen Worten kann so ein Zusammenhang zwischen einem bestimmten Füllmengenwert und der Befüllung in einer bestimmten Füllstation hergestellt werden.

Insbesondere können bei dem Verfahren Füllmengenmittelwert aus den Füllmengenwerten gebildet werden um damit die Füllzeiten der Füllstationen zu korrigieren. Dabei kann der Füllmengenmittelwert bedeuten, dass die Füllmengenwerte zu einem bestimmten Zeitpunkt gemittelt werden, welche in dem Füller innerhalb einer bestimmten Zeitspanne vor diesem Zeitpunkt befüllt wurden.

Es kann so eine genauere Einstellung der Füllmenge des fließfähigen Mediums für die nachfolgenden Behälter erreicht werden. Zusätzlich können auch Veränderungen in der Füllmenge erfasst und korrigiert werden.

Weitere Merkmale und Vorteile der Erfindung werden nachfolgend anhand der in den Figuren dargestellten Ausführungsbeispiele erläutert. Dabei zeigt
- Figur 1: eine Darstellung einer erfindungsgemäßen Vorrichtung zum Befüllen von Behältern in einer Draufsicht;
- Figur 2A: ein Karussell mit Messstationen der in Figur 1 dargestellten Vorrichtung in einer Draufsicht;
- Figur 2B: ein Beispiel einer Messstation des in Figur 2A dargestellten Karussells in einer Schnittansicht;
- Figur 3: ein weiteres Beispiel einer Messstation in einer Seitenansicht, und
- Figur 4: ein Beispiel von elektronischen Steuerungen mit einem Bussystem als Blockdarstellung.

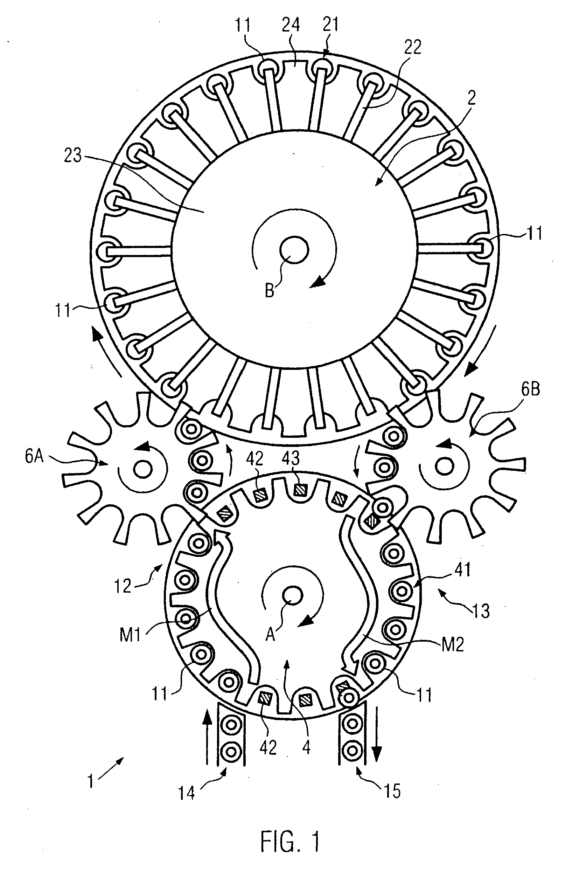

Figur 1 stellt ein Ausführungsbeispiel einer erfindungsgemäßen Vorrichtung 1 zum Befüllen von Behältern 11 in einer Draufsicht dar. Zu sehen ist ein Karussell 4, das mehrere Messstationen 41 aufweist, die über den Umfang des Karussells regelmäßig angeordnet sind. Das Karussell 4 ist dabei um eine Achse A drehbar ausgeführt und wird beispielsweise über einen Elektromotor und ein Getriebe (nicht dargestellt) angetrieben, so dass es sich mit einer konstanten Winkelgeschwindigkeit dreht. Dadurch drehen sich die Messstationen 41 ebenfalls mit einer konstanten Geschwindigkeit um die Achse A. Die Messstationen 41 sind dabei mit Mitnehmern 43 ausgeführt, welche die Behälter 11 im Karussell 4 weitertransportieren und beim Wiegen stabilisieren. Die Messstationen 41 sind mit Wiegeelementen 42 so ausgeführt, dass die Behälter in den Messstationen gewogen werden können während sich das Karussell 4 dreht und die Behälter 11 fortlaufend weiter transportiert werden.

Ein Teil der Messstationen 41 des Karussells 4 bildet die Messstrecke M1 zur Bestimmung des Leergewichts der Behälter 11 im Zulauf 12 der Vorrichtung. Das Karussell ist so ausgebildet, dass sich dieses um die Achse A dreht und fortwährend ein anderer Teil der Gesamtmenge aller Messstationen 41 die Messstrecke M1 bildet. Ebenso bildet fortwährend ein anderer Teil der Gesamtmenge aller Messstationen 41 des Karussells 4 die Messstrecke M2 zur Bestimmung des Endgewichts der Behälter 11 im Ablauf 13 der Vorrichtung.

Das Karussell 4 ist einem Füller 2 der Vorrichtung zugeordnet, welcher dazu vorgesehen ist die Behälter 11 mit einer vorherbestimmten Füllmenge eines fließfähigen Mediums zu befüllen. Das fließfähige Medium kann dabei ein Getränk, eine Paste, ein chemisches, pharmazeutisches und/oder biologisches Produkt sein. Im Zentrum des Füllers 2 ist ein Tank 23 angeordnet, welcher einen Vorrat des fließfähigen Mediums beinhaltet. Ebenso kann der Füller 2 derart ausgeführt sein, dass diesem über ein Rohrsystem das fließfähige Medium kontinuierlich zugeführt wird. Die zeitgesteuerten Dosiereinrichtungen 22 in den Füllstationen 21 sind mit dem Tank 23 verbunden, und sind dazu vorgesehen eine vorherbestimmte Füllmenge des fließfähigen Mediums in jeden Behälter 11 zu füllen. Mit den Haltern 24 werden dabei die Behälter während des Transports in den Füllstationen 21 stabilisiert.

Der Füller 2 dreht sich mit einer konstanten Winkelgeschwindigkeit um die Achse B und ist mit Füllstationen 21 so ausgeführt, dass sich diese auf einer Kreisbahn um die Achse B drehen. Die Winkelgeschwindigkeiten des Füllers 2 und des Karussells 4 sind dabei so aufeinander abgestimmt, dass sich darin die Behälter 11 mit der gleichen Behältergeschwindigkeit bewegen.

Zwischen dem Füller 2 und dem Karussell 4 sind zwei Transportsterne 6A, 6B angeordnet, welche die Behälter übergeben. Die Winkelgeschwindigkeiten der Transportsterne 6A, 6B sind dabei so abgestimmt, dass sich die Behälter in den Transportsternen mit der gleichen Behältergeschwindigkeit bewegen wie im Füller 2 und im Karussell 4.

Die Vorrichtung 1 ist dabei so ausgebildet, dass leere Behälter 11 über eine Zuführung 14 den Messstationen 41 des Karussells 4 zugeführt werden. Am Anfang der Messstrecke M1 erfährt jeder Behälter 11 auf einem Wiegeelement 42 zunächst eine Beruhigungszeit und wird dann im weiteren Verlauf der Messstrecke M1 gewogen um das Leergewicht zu bestimmen und als elektrisches Signal ausgegeben. Beispielsweise kann dieses elektrische Signal von einer elektronischen Steuerung (nicht dargestellt) empfangen werden. Während der Wiegezeit bewegt sich der leere Behälter 11 mit einer konstanten Behältergeschwindigkeit entlang der Messstrecke M1 und wird zum Ende der Messstrecke M1 an einen Transportstern 6A ausgegeben. Der Behälter 11 wird an den Füller übergeben und dort mittels einer zeitgesteuerten Dosiereinrichtung 22 in einer bestimmten Füllstation 21 mit dem fließfähigen Medium befüllt. Dabei wird der Behälter kontinuierlich weitertransportiert, bis er nach Beendigung der Befüllung an den Transportstern 6B übergeben wird. Der Behälter 11 wird im Ablauf 13 zu einer Messstation 41 im Karussell 4 transportiert. Auf der Messstrecke M2 wird nach einer weiteren Beruhigungszeit das Endgewicht des Behälters 11 mit einem weiteren Wiegeelement 42 bestimmt und wiederum als elektrisches Signal ausgegeben. Das Leergewicht und das Endgewicht des Behälters 11 kann dabei in unterschiedlichen Messstationen 41 des Karussells 4 bestimmt werden. Während der Wiegezeit bewegt sich der befüllte Behälter 11 mit einer konstanten Behältergeschwindigkeit entlang der Messstrecke M2 und wird an dessen Ende an der Abführung 15 ausgegeben.

Durch die Differenz aus dem Endgewicht und dem Leergewicht des Behälters 11 wird dessen Füllmenge als Füllgewicht oder -volumen berechnet und der bestimmten Füllstation 21 zugeordnet, in dem der Behälter befüllt wurde. Aus den Füllmengenwerten der bestimmten Füllstation 21 werden dann Füllmengenmittelwerte berechnet und damit die Füllzeiten der zeitgesteuerten Dosiereinrichtungen 22 in den Füllstationen 21 korrigiert.

Dieser Vorgang wiederholt sich für alle leeren Behälter sequentiell, welche dem Karussell über die Zuführung 14 zugeführt werden. Es ergibt sich so ein kontinuierlicher Behälterfluss von der Zuführung 14 durch die Messstrecke M1 im Karussell 4 zum Transportstern 6A zur Befüllung im Füller 2 und über den Transportstern 6B zur Messstrecke M2, wiederum in das Karussell 4 und schließlich zur Abführung 15. Da in allen Füllstationen 21 Behälter 11 befüllt werden ergeben sich so Füllmengenmittelwerte für alle Füllstationen 21, deren Füllzeiten so korrigiert werden können.

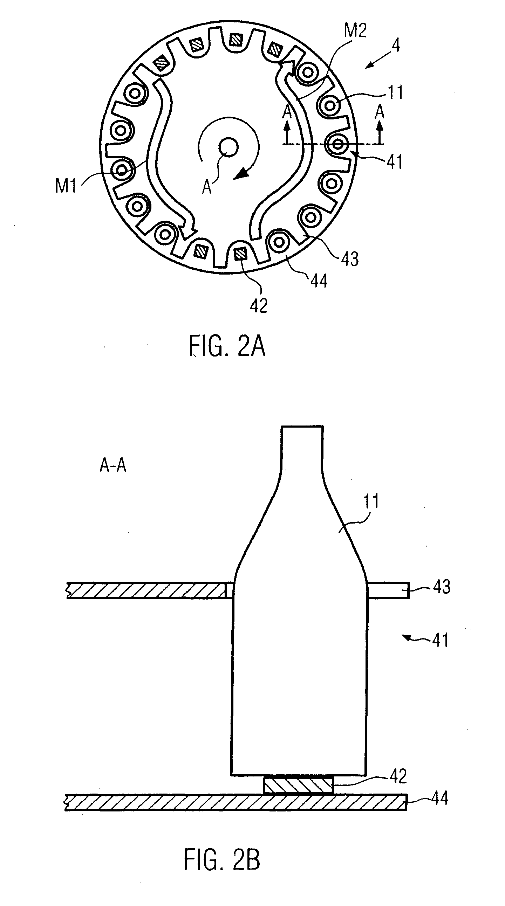

In Figur 2A ist ein Karussell 4 mit Messstationen 41 der in Figur 1 dargestellten Vorrichtung in einer Draufsicht dargestellt. Zu sehen sind ebenfalls eine Plattform 44 auf der die Messstationen 41 angeordnet sind und die jeweils Wiegeelemente 42 und Mitnehmer 43 aufweisen. In einigen der Messstationen 41 sind im Bereich der Messstrecken M1 und M2 Behälter angeordnet.

Figur 2B zeigt ein Beispiel einer Messstation 41 in einer Schnittansicht entlang der Schnittlinie A-A in Figur 2A. Dabei ist illustriert, dass sich auf der Plattform 44 das Wiegeelement 42 befindet auf der ein Behälter 11 bodenseitig aufsteht. Mit dem Wiegeelement 42 ist es in dieser Anordnung möglich, die Gewichtskraft des Behälters 41 zu messen. Der Behälter 11 kann in der dargestellten Anordnung sowohl leer als auch befüllt sein. Der Behälter 11 wird dabei von dem Mitnehmer 43 seitlich stabilisiert und beim Transport im Karussell 4 unterstützt.

Die dargestellte Anordnung kann dabei einen Teil der Messtrecke M1 oder M2 in Figur 2A bilden.

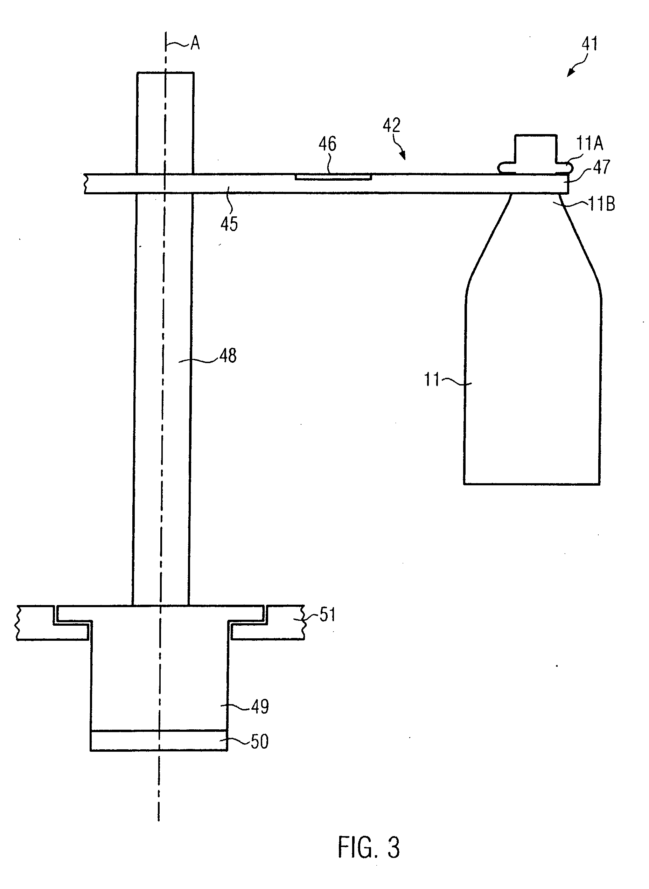

Figur 3 zeigt ein weiteres Beispiel einer Messstation 41 in einer Seitenansicht. Hierbei hängt der Behälter 11 in der Messstation 41 über eine Verbindung am Behälterhals 11 B.

Dabei weist der Behälterhals 11 B einen Kragen 11A auf. Der Behälterhals 11 B wird so in einem Klammerelement 47 während des Wiegens aufgenommen und transportiert. Das Klammerelement 47 ist dabei so ausgeführt, dass es eine lösbare Verbindung zum Behälter 11 aufweist. Das Klammerelement 47 ist mit dem Wiegelement 42 verbunden, das als hebelartiger Arm 45 ausgeführt ist und über einen Kraftsensor 46 verfügt. Der hebelartige Arm 45 ist am anderen Ende mit der Welle 48 fest verbunden, die mit einem Antriebselements 49 um die Achse A gedreht wird. Am unteren Teil des Antriebselements 49 ist ein Drehgeber 50 so ausgeführt, dass dieser die absolute Winkelposition der Welle 48 und damit der Messstationen 41 als Signal ausgibt. Das Antriebselement 49 ist mit einem Flansch in einer feststehenden Basisplatte 51 gelagert. Es versteht sich von selbst, dass die Welle 48 dabei mit mehreren derartig ausgeführten Messstationen 41 verbunden ist.

Durch die in der Figur 3 nach unten wirkende Gewichtskraft des Behälters 11 biegt sich der hebelartige Arm 45 im Bereich des Klammerelements 47 nach unten. Dadurch, dass der Kraftsensor 46 als Dehnungsmessstreifen ausgeführt ist, kann die Biegung des hebelartigen Arms 45 gemessen und so die Gewichtskraft des Behälters 11 bestimmt werden. Diese wird als elektrisches Signal vom Wiegeelement 42 ausgegeben.

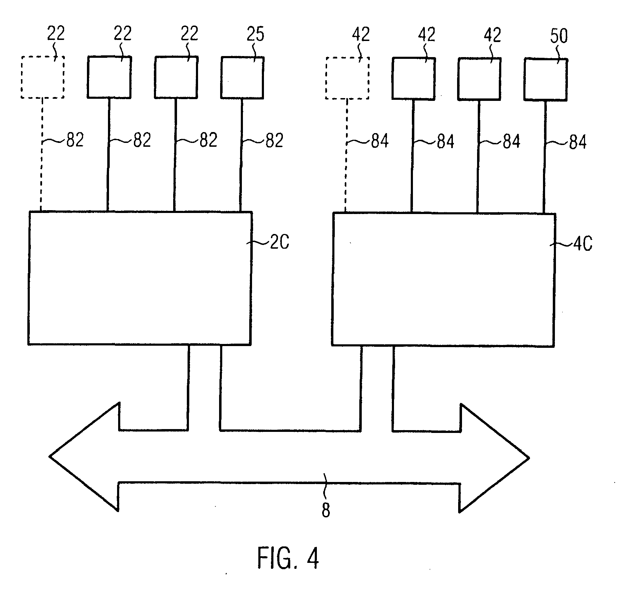

Figur 4 zeigt ein Beispiel von elektronischen Steuerungen 2C, 4C mit einem Bussystem 8 als Blockdarstellung. Zu sehen ist eine erste elektronische Steuerung 2C, die beispielsweise dem Füller 2 in Figur 1 zugeordnet ist. Diese ist mit mehreren zeitgesteuerten Dosiereinrichtungen 22 über elektrische Leitungen 82 verbunden und sendet diesen Signale um Ventile in den Dosiereinrichtungen 22 zu öffnen oder zu schließen. Darüber können beispielsweise die Füllzeiten der Füllstationen 21 in der Figur 1 gesteuert werden. Zusätzlich weist die erste elektronische Steuerung 2C ein elektrische Leitung zu einem Drehgeber 25 auf, welcher die absoluten Winkelposition der Füllstationen 21 als elektrisches Signal an die elektronische Steuerung 2C sendet. Somit kann die Winkelposition einer bestimmten Füllstation 21 in der elektronischen Steuerung 2C berechnet werden.

Ebenso zu sehen ist eine zweite elektronische Steuerung 4C, welche beispielsweise dem Karussell 4 mit den Messstationen 41 in Figur 1 zugeordnet ist. Dieses weist mehrere elektrische Verbindungen 84 zu Wiegeelementen 42 auf und empfängt von diesen Signale, welche den Leergewichten und den Endgewichten der Behälter 11 entsprechen. Zusätzlich empfängt die zweite elektronische Steuerung 4C ein Signal von einem weiteren Drehgeber 50 im Karussell 4, aus dem sich die Winkelpositionen der Messstationen 41 in Figur 1 berechnen lassen.

Beide elektronischen Steuerung 2C, 4C sind über ein Bussystem 8 miteinander verbunden, mit dem diese Daten und/oder Signale austauschen.

In der zweiten elektronischen Steuerung 4C lässt sich zunächst das Leergewicht eines Behälters 11 in einem Speicher ablegen. Das Endgewicht desselben Behälters 11 lässt sich nach dem Befüllen diesem gespeicherten Leergewicht zuordnen. Die zweite elektronische Steuerung 4C berechnet dann den Füllmengenwert des Behälters 11 und sendet diesen über das Bussystem 8 an die erste Steuerung 2C, welche dann den Füllmengenwert einer bestimmten Füllstation 21 zuordnet. Die Füllmengenwerte von mehreren Behältern 11 für mehrere Füllstationen 21 werden dann entsprechend im Speicher der ersten elektronischen Steuerung 2C abgelegt. Aus den Füllmengenwerten einer Vielzahl von Behältern 11 werden dann Füllmengenmittelwerte für jede einzelne Füllstationen 21 berechnet und mit der vorherbestimmten Füllmenge verglichen. Daraus berechnet sich dann für jede einzelne Füllstation 21 eine neue, korrigierte Füllzeit um die nachfolgenden Behälter 11 mit der vorherbestimmten Füllmenge zu befüllen.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Vorrichtung (1) zum Befüllen von Behältern (11), umfassend einen Füller (2) mit mehreren Füllstationen (21), zu der Behälter (11) über einen Zulauf (12) zugeführt und von der Behälter (11) über einen Ablauf (13) abgeführt werden,
**dadurch gekennzeichnet, dass**
dem Füller (2) ein Karussell (4) mit mehreren Messstationen (41) zum Wiegen der Behälter (11) derart zugeordnet ist, dass eine Messstrecke (M1) des Karussells (4) zur Bestimmung des Leergewichts der Behälter (11) im Zulauf (12) und eine Messstrecke (M2) desselben Karussells (4) zur Bestimmung des Endgewichts der Behälter (11) im Ablauf (13) gebildet wird.

2. Vorrichtung (1) zum Befüllen von Behältern (11) nach Anspruch 1, wobei das Karussell (4) derart ausgebildet ist, dass die Behälter im Karussell (4) mit der gleichen Behältergeschwindigkeit wie im Füller (2) transportiert werden.

3. Vorrichtung (1) zum Befüllen von Behältern (11) nach Anspruch 1 oder 2, wobei zwischen dem Füller (2) und dem Karussell (4) mindestens ein Transportstern (6A, 6B) angeordnet ist.

4. Vorrichtung (1) zum Befüllen von Behältern (11) nach einem der vorangegangenen Ansprüche, wobei das Karussell (4) dazu vorgesehen ist, die Füllmenge der abgeführten Behälter (11) zu bestimmen.

5. Vorrichtung (1) zum Befüllen von Behältern (11) nach einem der vorangegangenen Ansprüche, wobei jede Messstation (41) mindestens ein Wiegeelement (42) umfasst.

6. Vorrichtung (1) zum Befüllen von Behältern (11) nach Anspruch 5, wobei während dem Wiegen der Behälter (11) auf mindestens einem Wiegeelement (42) bodenseitig aufsteht.

7. Vorrichtung (1) zum Befüllen von Behältern (11) nach Anspruch 5, wobei während dem Wiegen das Wiegeelement (42) eine Verbindung zu einem Behälterhals (11 B) aufweist.

8. Vorrichtung (1) zum Befüllen von Behältern (11) nach einem der vorangegangenen Ansprüche, wobei jede Füllstation (21) mindestens eine zeitgesteuerte Dosiereinheit (22) umfasst.

9. Vorrichtung (1) zum Befüllen von Behältern (11) nach einem der vorangegangenen Ansprüche, wobei die Vorrichtung mindestens eine elektronische Steuereinheit (2C, 4C) umfasst.

10. Vorrichtung (1) zum Befüllen von Behältern (11) nach Anspruch 9, wobei die mindestens eine elektronische Steuereinheit (2C, 4C) dazu vorgesehen ist, dass sie die Füllmengenwerte der Behälter (11) den Füllstationen (21) zuordnet und damit Signale zur Korrektur der Füllzeiten erzeugt.

11. Vorrichtung (1) zum Befüllen von Behältern (11) nach einem der vorangegangenen Ansprüche, wobei der Füller (2) und das Karussell (4) über ein Bussystem (8) verbunden sind, welches dazu vorgesehen ist Daten und/oder Signale auszutauschen.

12. Verfahren zum Befüllen von Behältern (11) mit einer Vorrichtung nach Anspruch 1, bei dem die Behälter (11) einem Karussell (4) mit Messstationen (41) zugeführt werden, dort ihre Leergewichte in einer dem Zulauf (12) zugeordneten Messstrecke (M1) bestimmt und dann von dem Karussell (4) an einen Füller (2) übergeben werden, dort befüllt und dann wiederum dem selben Karussell (4) übergeben werden um ihre Endgewichte in einer dem Ablauf (13) zugeordneten Messstrecke (M2) zu bestimmen.

13. Verfahren zum Befüllen von Behältern (11) nach Anspruch 12 bei dem die Behälter (11) beim Befüllen den Füllstationen (21) zugeordnet werden und im Karussell (4) Füllmengenwerte aus den Leergewichten und den Endgewichten für die Behälter (11) berechnet und den jeweiligen Füllstationen (21) zugeordnet werden.

14. Verfahren zum Befüllen von Behältern (11) nach Anspruch 13 bei dem Füllmengenmittelwerte aus den Füllmengenwerten gebildet werden um damit die Füllzeiten der Füllstationen (21) zu korrigieren.

## Claims

1. Device (1) for filling containers (11), comprising a filler (2) with several filling stations (21), to which containers (11) are conveyed via an inlet (12) and from which containers (11) are transported away via a discharge section (13),
**characterised in that**
the filler (2) has a carousel (4) with several measuring stations (41) for weighing the containers (11) attached to it; this is attached in such a way that one measuring section (M1) of the carousel (4) for determining the tare weight of the containers (11) is in the inlet (12) and one measuring section (M2) of the same carousel (4) for determining the final weight of the containers (11) is in the discharge section (13).

2. Device (1) for filling containers (11) according to Claim 1, wherein the carousel (4) is designed in such a way that the containers in the carousel (4) are transported at the same container speed as in the filler (2).

3. Device (1) for filling containers (11) according to Claim 1 or 2, wherein at least one transportation star wheel (6A, 6B) is arranged between the filler (2) and the carousel (4).

4. Device (1) for filling containers (11) according to any one of the preceding claims, wherein the carousel (4) is designed to determine the fill quantity of the containers being transported away (11).

5. Device (1) for filling containers (11) according to any one of the preceding claims, wherein each measuring station (41) comprises at least one weighing element (42).

6. Device (1) for filling containers (11) according to Claim 5, wherein during the weighing, the container (11) stands with its base on at least one weighing element (42).

7. Device (1) for filling containers (11) according to Claim 5, wherein during the weighing, the weighing element (42) has a connection to the neck of one container (11 B).

8. Device (1) for filling containers (11) according to any one of the preceding claims, wherein each filling station (21) comprises at least one time-controlled dosing unit (22).

9. Device (1) for filling containers (11) according to any one of the preceding claims, wherein the device comprises at least one electronic control unit (2C, 4C).

10. Device (1) for filling containers (11) according to Claim 9, wherein the at least one electronic control unit (2C, 4C) is designed to assign the fill quantities of the containers (11) to the filling stations (21) and thus generate signals for correcting the filling times.

11. Device (1) for filling containers (11) according to any one of the preceding claims, wherein the filler (2) and the carousel (4) are connected via a bus system (8) which is designed to exchange data and/or signals.

12. Method for filling containers (11) with a device according to Claim 1, in which the containers (11) are conveyed to a carousel (4) with measuring stations (41), their tare weights are determined there in a measuring section (M1) assigned to the inlet (12) and they are then transferred from the carousel (4) to a filler (2), filled there and then in turn transferred to the same carousel (4) in order to determine their final weights in a measuring section (M2) assigned to the discharge section (13).

13. Method for filling containers (11) according to Claim 12, in which the containers (11) are assigned to the filling stations (21) during filling and in the carousel (4) fill quantity values are calculated from the tare weights and the final weights for the containers (11) and assigned to the particular filling stations (21).

14. Method for filling containers (11) according to Claim 13, in which average fill quantity values are formed from the fill quantity values in order, in this way, to correct the filling times of the filling stations (21).

## Revendications

1. Dispositif (1) pour le remplissage de récipients ou contenants (11), comprenant une unité de remplissage (2) avec plusieurs postes de remplissage (21), vers laquelle sont amenés des contenants (11) par l'intermédiaire d'un système d'alimentation (12), et de laquelle sont évacués des contenants (11) par l'intermédiaire d'un système d'évacuation (13),
**caractérisé**
**en ce qu'**à l'unité de remplissage (2) est associé un carrousel (4) avec plusieurs postes de mesure (41) pour peser les contenants (11) de manière telle, qu'un parcours de mesure (M1) du carrousel (4) pour la détermination du poids à vide des contenants (11) soit formé dans le système d'alimentation (12), et qu'un parcours de mesure (M2) du même carrousel (4) pour la détermination du poids final des contenants (11) soit formé dans le système d'évacuation (13).

2. Dispositif (1) pour le remplissage de contenants (11) selon la revendication 1, dans lequel le carrousel (4) est conçu de manière à ce que les contenants soient transportés dans le carrousel (4) avec la même vitesse de contenant que dans l'unité de remplissage (2).

3. Dispositif (1) pour le remplissage de contenants (11) selon la revendication 1 ou la revendication 2, dans lequel entre l'unité de remplissage (2) et le carrousel (4) est agencée au moins une étoile de transport (6A, 6B).

4. Dispositif (1) pour le remplissage de contenants (11) selon l'une des revendications précédentes, dans lequel le carrousel (4) est prévu pour déterminer la quantité de remplissage des contenants (11) ayant été remplis.

5. Dispositif (1) pour le remplissage de contenants (11) selon l'une des revendications précédentes, dans lequel chaque poste de mesure (41) comprend au moins un élément de pesée (42).

6. Dispositif (1) pour le remplissage de contenants (11) selon la revendication 5, dans lequel pendant la pesée, le contenant (11) repose par son côté de fond sur au moins un élément de pesée (42).

7. Dispositif (1) pour le remplissage de contenants (11) selon la revendication 5, dans lequel pendant la pesée, l'élément de pesée (42) présente une liaison à un col de contenant (11B).

8. Dispositif (1) pour le remplissage de contenants (11) selon l'une des revendications précédentes, dans lequel chaque poste de remplissage (21) comprend au moins une unité de dosage (22) commandée temporellement.

9. Dispositif (1) pour le remplissage de contenants (11) selon l'une des revendications précédentes, le dispositif comprenant au moins une unité de commande électronique (2C, 4C).

10. Dispositif (1) pour le remplissage de contenants (11) selon la revendication 9, dans lequel ladite au moins une unité de commande (2C, 4C) est prévue pour associer les valeurs de quantité de remplissage des contenants (11) aux postes de remplissage (21) et engendre ainsi des signaux pour la correction des temps de remplissage.

11. Dispositif (1) pour le remplissage de contenants (11) selon l'une des revendications précédentes, dans lequel l'unité de remplissage (2) et le carrousel (4) sont reliés par l'intermédiaire d'un système de bus (8), qui est prévu pour échanger des données et/ou des signaux.

12. Procédé pour le remplissage de récipients ou contenants (11) à l'aide d'un dispositif selon la revendication 1, d'après lequel les contenants (11) sont amenés à un carrousel (4) comprenant des postes de mesure (41), où leur poids à vide sont déterminés dans un parcours de mesure (M1) associé à un système d'alimentation (12), puis sont transférés du carrousel (4) à une unité de remplissage (2) où ils sont remplis, et sont ensuite à nouveau transférés au même carrousel (4) pour déterminer leurs poids finals dans un parcours de mesure (M2) associé au système d'évacuation (13).

13. Procédé pour le remplissage de contenants (11) selon la revendication 12, d'après lequel les contenants (11) sont, lors du remplissage, associés aux postes de remplissage (21), et d'après lequel, dans le carrousel (4), des valeurs de quantité de remplissage sont calculées pour les contenants (11), à partir des poids à vide et des poids finals, et sont affectées aux postes de remplissage (21) respectifs.

14. Procédé pour le remplissage de contenants (11) selon la revendication 13, d'après lequel des valeurs moyennes de quantité de remplissage sont formées à partir des valeurs de quantité de remplissage, pour servir à la correction des temps de remplissage des postes de remplissage (21).
